# EUROPÄISCHE PATENTANMELDUNG

(11) **EP 3 750 834 A1**
(43) Veröffentlichungstag der Anmeldung: **16.12.2020**
(21) Anmeldenummer: 20179468.2
(22) Anmeldetag: 11.06.2020
(51) Int. Cl.: B65G 19/02, B65G 19/24

(54) **VEREINZELUNGSEINRICHTUNG, ZUGMITTEL MIT ZUMINDEST EINER VEREINZELUNGSEINRICHTUNG, TRANSPORTSYSTEM UND VERFAHREN ZUM VEREINZELN UND MITNEHMEN ZUMINDEST EINES LADUNGSTRÄGERS**

(30) Priorität: 11.06.2019 DE 102019208476
(71) Anmelder: BEUMER Group GmbH & Co. KG, 59269 Beckum (DE)
(72) Erfinder: Neugebauer, Jürgen, 8102 Semriach (AT); Sandor, Nicolas, 8583 Edelschrott (AT)
(74) Vertreter: Philipp, Matthias

(57) **Zusammenfassung**

Vereinzelungseinrichtung (15) zum Separieren von zumindest einem Ladungsträger von einem weiteren Ladungsträger umfassend: ein Mitnehmerelement (20) zum Anordnen an einem Zugmittel (30) eines Transportsystems, wobei das Mitnehmerelement (20) einen Befestigungsabschnitt (21) zum Befestigen des Mitnehmerelements (20) an dem Zugmittel (30) und einen Mitnahmeabschnitt (23) zum Mitnehmen zumindest eines Ladungsträgers aufweist und das Mitnehmerelement (20) zumindest abschnittsweise von einer Mitnahmeposition in eine Freigabeposition überführbar ist

## Beschreibung

Die Erfindung betrifft eine Vereinzelungseinrichtung nach Anspruch 1, ein Zugmittel mit zumindest einer Vereinzelungseinrichtung nach Anspruch 9, ein Transportsystem nach Anspruch 10 sowie ein Verfahren zum Vereinzeln und Mitnehmen zumindest eines Ladungsträgers nach Anspruch 13.

Um einen schnellen und zuverlässigen Warentransport zu gewährleisten, werden unterschiedliche Waren typischerweise in einem Logistikzentrum gesammelt und dort typischerweise mithilfe eines Transportsystems an unterschiedliche Zuteilungspunkte im Logistikzentrum geliefert. Dabei werden die Waren in Ladungsträgerbehälter, wie beispielsweise Hängetaschen, gegeben, welche an Ladungsträgern angekoppelt werden und anschliessend entlang einer Wegstrecke im Transportsystem von Zuteilungspunkt zu Zuteilungspunkt transportiert. Um einen möglichst kosteneffizienten Transport im Transportsystem schaffen zu können, werden die Ladungsträger dicht aneinander gefördert. Dabei ist es besonders wichtig, dass ein unterbrechungsfreies Transportieren der Ladungsträger gewährleistet ist. Typischerweise wird die Wegstecke an diversen Wegstreckenpunkten überwacht, um bei einer Transportunterbrechung schnellstmöglich eingreifen zu können. Typischerweise ist das Überwachen der Transportsysteme mit kostenintensiver Sensorik, oder auch Kameras, und/oder mit hohen Personalaufwand verbunden. Die dicht aneinander geförderten Ladungsträger müssen zumindest an einzelne Zuteilungspunkte separiert bzw. vereinzelt werden. Das Vereinzeln der Ladungsträger wird typischerweise mit einer Vereinzelungseinrichtung durchgeführt, welche im Transportsystem angeordnet ist. Dabei wird typischerweise die Transportgeschwindigkeit reduziert bzw. der Transportdurchsatz im Transportsystem reduziert.

Die EP 2 910 499 A1 offenbart ein Transportsystem zum Transportieren von Hängeartikel mit einer Transporteinrichtung und mit einer Vereinzelungseinrichtung. Die Transporteinrichtung weist eine Förderkette als Transportmittel auf, an der die Vereinzelungseinrichtung mit mehreren Vereinzelungsmittel zum Vereinzeln und Mitnehmen von Ladungsträger angeordnet ist. Die Förderkette führt somit die Vereinzelungsmittel zu den Ladungsträgern und vereinzelt die mehreren Ladungsträger, welche anschliessend von den diesem Vereinzelungsmittel mitgenommen werden.

Nachteilig an dieser bekannten Lösung ist, dass die mehreren Vereinzelungsmittel ortsfest an der Vereinzelungseinrichtung angeordnet sind und somit mit den Ladungsträgern in dem Transportsystem bezüglich deren Baugrösse mechanisch abgestimmt sein müssen, um eine Kollision und somit einen ungewünschten Stillstand in dem Transportsystem vermeiden zu können.

Es ist die Aufgabe der vorliegenden Erfindung, einen oder mehrere Nachteile des Standes der Technik zu beheben. Insbesondere soll eine Vereinzelungseinrichtung geschaffen werden, welche einen einfachen Aufbau aufweist und ein zuverlässiges Vereinzeln und Mitnehmen von Ladungsträgern mithilfe der Transporteinrichtung störungsfrei gewährleistet. Weiters soll ein Zugmittel als Transporteinrichtung geschaffen werden, welche die Transportierzuverlässigkeit in einem Transportsystem mit mehreren Ladungsträgern gewährleistet sowie ein Transportmittel geschaffen werden, das ausfallsfrei betrieben werden kann. Zudem soll ein Verfahren zum Vereinzeln und Mitnehmen zumindest eines Ladungsträgers geschaffen werden, mit dem ein ausfallsfreies Betreiben eines Transportsystems ermöglicht wird.

Zumindest einzelne dieser Aufgaben werden durch die in den unabhängigen Patentansprüchen definierten Einrichtungen und Verfahren gelöst. Vorteilhafte Weiterbildungen sind in den Figuren, der Beschreibung und insbesondere in den abhängigen Patentansprüchen dargelegt.

Eine erfindungsgemässe Vereinzelungseinrichtung zum Separieren von zumindest einem Ladungsträger von einem weiteren Ladungsträger umfasst zumindest ein Mitnehmerelement zum Anordnen an einem Zugmittel eines Transportsystems, wobei das zumindest eine Mitnehmerelement einen Befestigungsabschnitt zum Befestigen des zumindest einen Mitnehmerelements an dem Zugmittel und einen Mitnahmeabschnitt zum Mitnehmen zumindest eines Ladungsträgers aufweist. Das zumindest eine Mitnehmerelement ist zumindest abschnittsweise von einer Mitnahmeposition in eine Freigabeposition überführbar.

Beim Heranführen des zumindest einen Mitnehmerelements an den zumindest einen Ladungsträger kann das zumindest eine Mitnehmerelement den zumindest einen Ladungsträger berühren und anschliessend vereinzeln, wobei anschliessend der zumindest eine Ladungsträger entlang einer Zugmittelstrecke des Zugmittels mitgenommen werden kann. Um eine ungewünschte Kollision zwischen dem zumindest einen Mitnehmerelement und dem zumindest einen Ladungsträger verhindern zu können, ist das zumindest eine Mitnehmerelement zumindest abschnittsweise von einer Mitnahmeposition in eine Freigabeposition überführbar. Als Mitnahmeposition wird hier vorliegend jene Position definiert, in der das zumindest eine Mitnehmerelement den zumindest einen Ladungsträger entlang einer Zugmittelstrecke frei mitnehmen kann. Die Freigabeposition ist hier vorliegend jene Position, in der das zumindest eine Mitnehmerelement den zumindest einen Ladungsträger nicht entlang einer Zugmittelstrecke mitnehmen kann. Befindet sich das zumindest eine Mitnehmerelement in der Freigabeposition, so ist dieses am zumindest einen Ladungsträger vorbeiführbar, ohne diesen vollständig aufzugreifen und mitzunehmen. Anschliessend ist das zumindest eine Mitnehmerelement zumindest abschnittsweise von der Freigabeposition in die Mitnahmeposition überführbar. Die Vereinzelungseinrichtung gewährleistet somit ein ausfallsfreies Betreiben eines Transportsystems, da beim Separieren bzw. Vereinzeln des zumindest einen Ladungsträgers vom weiteren Ladungsträger eine zu einem Formschluss zwischen dem zumindest einen Mitnehmerelement und einem der beiden Ladungsträger führende Kollision verhinderbar ist. Dabei ist die Vereinzelungseinrichtung ein Teil des Zugmittels im Transportsystem, sodass eine separate Vereinzelungseinrichtung eingespart werden kann.

Vorteilhaft ist das zumindest eine Mitnehmerelement mithilfe eines Befestigungsmittels an dem Zugmittel angeordnet, sodass das zumindest eine Mitnehmerelement zumindest nicht selbstständig separierbar ist. Damit kann ein ungewünschtes Loslösen des zumindest eine Mitnehmerelements von der Vereinzelungseinrichtung verhindert werden. Beispielsweise ist das Befestigungsmittel ein Sicherungsring oder ein Sicherungssplint, eine Schraube, eine Niete, ein Bolzen, ein Klebstoff oder dergleichen.

Alternativ oder ergänzend ist das zumindest eine Mitnehmerelement mithilfe eines Kaltverformungsverfahrens, wie beispielsweise Kaltpressen oder andere, beweglich an dem Zugmittel angeordnet bzw. mit dem Zugmittel verbunden. Damit kann das Separieren des zumindest einen Mitnehmerelements vom Zugmittel verhindert werden.

Vorzugsweise ist zumindest eine Überführungseinrichtung zum zumindest abschnittsweisen Überführen des zumindest einen Mitnehmerelements zumindest von der Freigabeposition in die Mitnahmeposition vorhanden. Mit der Überführungseinrichtung kann somit das zumindest eine Mitnehmerelement einfach von der Freigabeposition zurück in die Mitnahmeposition überführt werden.

Vorteilhaft ist die zumindest eine Überführungseinrichtung zwischen dem Befestigungsabschnitt und dem Mitnahmeabschnitt des zumindest einen Mitnehmerelements angeordnet. Damit kann eine Überführungseinrichtung bereitgestellt werden, welche platzsparend an dem zumindest einen Mitnehmerelement der Vereinzelungseinrichtung angeordnet ist.

Vorteilhaft stammt die zumindest eine Überführungseinrichtung aus der Gruppe einer Gelenkseinrichtung, einer Federeinrichtung oder einer Magneteinrichtung. Eine Federeinrichtung kann dabei zumindest eine Schraubenfeder oder eine Spiralfeder oder zumindest eine Blattfeder umfassen. Die Federkraft der Federeinrichtung ist dabei vorteilhaft derart dimensioniert, dass zumindest das Transportgewicht des zumindest einen Ladungsträgers überwunden werden kann und somit der zumindest eine Ladungsträger störungsfrei mitnehmbar ist. Umfasst die zumindest eine Überführungseinrichtung eine Gelenkseinrichtung, so kann diese Überführungseinrichtung vorteilhaft mit einer Federeinrichtung, beispielsweise mit einer Blattfeder, gekoppelt sein. Bevor eine zu einem Formschluss zwischen dem zumindest einem Mitnehmerelement und dem zumindest einen Ladungsträger führende Kollision eintritt, wird dabei die Federkraft der Federeinrichtung vom zumindest einen Ladungsträger derart überwunden, dass die Gelenkseinrichtung zumindest abschnittsweise nachgibt und den zumindest einen Ladungsträger freigibt. Eine Magneteinrichtung als zumindest eine Überführungseinrichtung ermöglicht ein berührungsfreies oder einfaches Separieren bzw. Vereinzeln des zumindest einen Ladungsträgers vom weiteren Ladungsträger. Beispielsweise ist dabei das zumindest eine Mitnehmerelement aus einem magnetisierbaren oder magnetischen Material ausgebildet.

Bevorzugt ist vorgesehen, dass das zumindest eine Mitnehmerelement in der Mitnahmeposition an einer Bewegung entgegen einer Mitnahmerichtung, in der das Zugmittel zum Mitnehmen eines Ladungsträgers bewegbar ist, gehindert ist. Dies kann bevorzugt insbesondere dadurch realisiert werden, dass das zumindest eine Mitnehmerelement geradlinig in einer quer zu einer Mitnehmerrichtung, in der das Zugmittel zum Mitnehmen eines Ladungsträgers bewegbar ist, verlaufenden Richtung von der Mitnahmeposition in die Freigabeposition bewegbar ist.

Dadurch weist das Mitnehmerelement bevorzugt ausschließlich eine Bewegbarkeit quer zur Mitnahmerichtung auf, die das Mitnehmerelement zur Bewegung zwischen Mitnahme- und Freigabeposition befähigt, wobei aber keine Bewegung entgegen der Mitnahmerichtung möglich ist, so dass bedarfsweise auch erhebliche Mitnehmerkräfte übertragen werden können.

Bevorzugterweise weist das zumindest eine Mitnehmerelement einen Mitnehmerpin auf, welcher am zumindest einen Mitnehmerelement angeordnet ist. Der Mitnehmerpin kann im Mitnahmeabschnitt des zumindest einen Mitnehmerelements angeordnet sein. Der Mitnehmerpin ist ausgebildet, den zumindest einen Ladungsträger beim Heranführen desselben zu berühren und nach dem Vereinzeln des Ladungsträgers diesen mitzunehmen. Der Mitnehmerpin kann kugelförmig, zylinderförmig, quaderförmig, keilförmig oder dergleichen ausgebildet sein.

Vorteilhaft ist der Mitnehmerpin von der Mitnahmeposition in die Freigabeposition überführbar. Dabei kann das zumindest eine Mitnehmerelement statisch an der Vereinzelungseinrichtung angeordnet sein. In der Mitnahmeposition nimmt der Mitnehmerpin den zumindest einen Ladungsträger mit, wo hingehend der Mitnehmerpin in dessen Freigabeposition am zumindest einen Ladungsträger vorbeiführbar ist und diesen somit freigibt. Anschliessend kann der Mitnehmerpin von der Freigabeposition in die Mitnahmeposition überführt werden. Der Mitnehmerpin der Vereinzelungseinrichtung gewährleistet somit ein ausfallsfreies Betreiben eines Transportsystems, da beim Separieren bzw. Vereinzeln des zumindest einen Ladungsträgers vom weiteren Ladungsträger eine zu einem Formschluss zwischen dem Mitnehmerpin und einem der beiden Ladungsträger führende Kollision verhinderbar ist.

Vorteilhaft weist das zumindest eine Mitnehmerelement ein Mitnehmerkolbenelement auf, welches den Mitnehmerpin am zumindest einen Mitnehmerelement sichert. Dabei kann der Durchmesser des Mitnehmerkolbenelements grösser sein als der Durchmesser des zumindest einen Mitnehmerelements, sodass ein Separieren des Mitmehmerpins verhinderbar ist.

Insbesondere ist der Mitnehmerpin mit dem zumindest einen Mitnehmerelement gemeinsam von der Mitnahmeposition in die Freigabeposition überführbar. Damit werden die zuvor genannten Funktionen bzw. Vorteile weiter verbessert und ein ungewünschtes Mitnehmen von mehr als einem Ladungsträger ist verhinderbar.

Vorzugsweise ist die zumindest eine Überführungseinrichtung zumindest abschnittsweise entlang einer Längsachse des zumindest einen Mitnehmerelements relativ zu dem zumindest einen Mitnehmerelement versetzbar. Die zumindest eine Überführungseinrichtung befindet sich in der Mitnahmeposition des zumindest einen Mitnehmerelements in deren Ausgangsposition bzw. in deren Ausgangsform. Die zumindest eine Überführungseinrichtung kann ausgebildet sein, beim Überführen des zumindest einen Mitnehmerelements von der Freigabeposition in die Mitnahmeposition zumindest abschnittsweise deren Ausgangsform bzw. Ausgangsposition zu verändern. Beispielsweise wird dabei eine Schraubenfeder komprimiert, oder eine Blattfeder verbogen.

Vorteilhaft ist das zumindest eine Mitnehmerelement entlang dieser Längsachse von der Mitnahmeposition in die Freigabeposition überführbar, wodurch eine kompakte und stabile Vereinzelungseinrichtung zur Verfügung gestellt wird, welche eine hohe Gebrauchsdauer des Transportsystems gewährleistet.

Alternativ oder ergänzend ist der Mitnehmerpin zumindest abschnittsweise entlang einer Längsachse des zumindest einen Mitnehmerelements relativ zu dem zumindest einen Mitnehmerelement versetzbar. Die zumindest eine Überführungseinrichtung kann dafür ausgebildet sein, beim Überführen des zumindest einen Mitnehmerpins von der Freigabeposition in die Mitnahmeposition zumindest abschnittsweise deren Ausgangsform bzw. Ausgangsposition zu verändern. Somit ist eine besonders platzsparende Vereinzelungseinrichtung in einem Transportsystem umsetzbar.

Bevorzugt ist vorgesehen, dass die Längsachse quer zu einer Mitnahmerichtung, in der das Zugmittel zum Mitnehmen eines Ladungsträgers bewegbar ist, angeordnet ist. Dadurch ist sichergestellt, wie bereits beschrieben, dass das Mitnehmerelement in der Mitnahmeposition an einer Bewegung entgegen der Mitnahmerichtung gehindert ist, und sichergestellt ist, dass eine Bewegung in die Freigabeposition nicht schon dadurch erfolgen kann, dass eine entgegen der Mitnahmerichtung wirkende Mitnahmekraft durch Kontakt des Mitnehmerelements mit einem Ladungsträger auftritt.

Bevorzugterweise ist die zumindest eine Überführungseinrichtung ausgebildet, das zumindest eine Mitnehmerelement während dem Mitnehmen eines Ladungsträgers in der Mitnahmeposition zu halten. Damit ist ein besonders stabiles Mitnehmen des zumindest einen Ladungsträger möglich. Beispielsweise ist beim Einsatz einer Federeinrichtung als zumindest eine Überführungseinrichtung das zumindest eine Mitnehmerelement vorspannbar an der Vereinzelungseinrichtung angeordnet.

Alternativ oder ergänzend ist die zumindest eine Überführungseinrichtung ausgebildet, den Mitnehmerpin während dem Mitnehmen eines Ladungsträgers in der Mitnahmeposition zu halten. Dadurch kann ein Verlieren des Mitnahmekontakts zum zumindest einen Ladungsträger verhindert werden.

Insbesondere ist die zumindest eine Überführungseinrichtung mit einer Antriebseinrichtung verbunden, die ausgebildet ist, das zumindest eine Mitnehmerelement und/oder den Mitnehmerpin des zumindest einen Mitnehmerelements von der Mitnahmeposition in die Freigabeposition und wieder zurück in die Mitnahmeposition zu überführen. Damit kann das zumindest eine Mitnehmerelement und/oder der Mitnehmerpin des zumindest einen Mitnehmerelements einfach und kontrolliert überführt werden. Beispielsweise umfasst die Antriebseinrichtung einen pneumatischen Antrieb, der das zumindest eine Mitnehmerelement und/oder den Mitnehmerpin des zumindest einen Mitnehmerelements von der Mitnahmeposition in die Freigabeposition und wieder zurück in die Mitnahmeposition zu überführen. Alternativ umfasst die Antriebseinrichtung einen elektrischen Antrieb. Damit können. Damit kann das zumindest eine Mitnehmerelement und/oder der Mitnehmerpin des zumindest einen Mitnehmerelements reproduzierbar und kontrolliert überführt werden.

Ein erfindungsgemässes Zugmittel mit mehreren Zugmittelelementen, umfasst zumindest eine wie hier vorliegend beschriebene Vereinzelungseinrichtung. Dabei kann das Zugmittel als eine Förderkette ausgebildet sein, wobei die Zugmittelelemente Kettenglieder sind. Das Zugmittel kann mithilfe einer separaten Antriebseinrichtung entlang einer Zugmittelstrecke bewegt werden. Beispielsweise wird diese Antriebseinrichtung von einem Motor angetrieben. Damit wird eine Transporteinrichtung in einem Transportsystem bereitgestellt, welche neben dem Transportieren des zumindest einen Ladungsträger entlang der Zugmittelstrecke bzw. entlang der Förderkettenstrecke auch das Vereinzeln von zumindest einen Ladungsträger von einem weiteren Ladungsträger ermöglicht. Auf eine separate Vereinzelungseinrichtung in dem Transportsystem kann verzichtet werden.

Vorteilhaft ist das zumindest eine Mitnehmerelement in einer Durchgangsöffnung an den Zugmittelelementen angeordnet. Damit ist das zumindest eine Mitnehmerelement stabil mit dem Zugmittel verbindbar.

Weiter vorteilhaft ist das zumindest eine Mitnehmerelement entlang einer Längsachse des zumindest einen Mitnehmerelements von der Mitnahmeposition in die Freigabeposition überführbar ist. Beispielsweise ist das Zugmittel als Hohlbolzenkette ausgebildet, sodass das zumindest eine Mitnehmerelement einfach im Hohlbolzen des Zugmittels bewegbar angeordnet ist, sodass der Aufbau des Zugmittels selbst einfach bzw. standardmässig ausgeführt sein kann.

Vorteilhaft ist das zumindest eine Mitnehmerelement ausgebildet, zumindest zwei Zugmittelelemente des Zugmittels miteinander zu verbinden. Damit können die Zugmittelelemente stabil miteinander verbunden werden und die Anzahl der Elemente des Zugmittels können reduziert werden. Beispielsweise weisen das erste Zugmittelelement und das zweite Zugmittelelement jeweils eine Durchführungsöffnung auf, in der das zumindest eine Mitnehmerelement angeordnet ist. Die Zugmittelelemente lassen sich in einer derartigen Ausführungsform vorteilhaft um das zumindest eine Mitnehmerelement drehen.

Vorteilhaft ist das zumindest eine Mitnehmerelement entlang der Durchführöffnungen der beiden Zugmittelelemente versetzbar angeordnet. Damit ist ein besonders einfaches Überführen des zumindest eine Mitnehmerelements von der Mitnahmeposition in die Freigabeposition möglich.

Bevorzugt weist das Zugmittel mehrere wie hier vorliegend beschriebene Vereinzelungseinrichtungen auf. Damit können mehrere Ladungsträger vereinzelt und einzeln entlang der Zugmittelstrecke mitgenommen werden.

Insbesondere sind mehrere Mitnehmerelemente ausgebildet, zumindest zwei Zugmittelelemente des Zugmittels miteinander zu verbinden, wodurch die Stabilität des Zugmittels weiter verbessert wird.

Ein erfindungsgemässes Transportsystem zum Transportieren von Ladungsträgern, mit einem Transportstreckenprofil zur Aufnahme und Führung von mehreren Ladungsträgern umfasst zumindest ein Zugmittel wie hier vorliegend beschrieben. Dabei weist das Zugmittel zumindest eine wie hier vorliegend beschriebene Vereinzelungseinrichtung auf. Dabei können die mehreren Ladungsträger am Transportstreckenprofil entlang des Transportstreckenprofil frei bewegbar angeordnet sein, wobei zumindest ein Ladungsträger von dem zumindest einen Mitnehmerelement vereinzelt und mitgenommen wird. Das Transportsystem benötigt keine separate Vereinzelungseinrichtung. Dadurch ist ein hoher Transportdurchsatz (Anzahl der transportierten Ladungsträger pro Zeiteinheit) bei gleichzeitiger sehr geringen Zugmittelgeschwindigkeit bzw. Fördergeschwindigkeit entlang der Zugmittelstrecke möglich. Die geringe Fördergeschwindigkeit ermöglicht ein geräuscharmes und energieeffizientes Betreiben des Transportsystems.

Insbesondere ist das Transportsystem als ein Schrägfördersystem ausgebildet. Ein Schrägfördersystem weist entlang der Zugmittelstrecke zumindest abschnittweise eine Steigung oder zumindest abschnittweise ein Gefälle auf, welche von dem zumindest einen Ladungsträger überwunden werden. Ein Schrägfördersystem mit einem wie hier vorliegend beschriebenen Zugmittel und mit zumindest einer wie hier vorliegend beschriebenen Vereinzelungseinrichtung ermöglicht einen Transport der Ladungsträger entlang einer Steigungsstrecke oder einer Gefällestrecke, die bis zu 90° auf die Horizontale bezogen, verlaufen. Neben den zuvor genannten Vorteilen, ist mithilfe dieses Schrägfördersystems ein vergrösserter Höhenunterschied bei einem geringen Grundflächenbedarf überwindbar.

Bevorzugterweise ist die zumindest eine Vereinzelungseinrichtung entlang der Zugmittelstrecke an das Transportstreckenprofil heranführbar. Dabei ist eine verbesserte Vereinzelungskrafteinleitung von dem zumindest einem Mitnehmerelement auf den zumindest einen Ladungsträger möglich, wodurch eine zu einem Formschluss zwischen dem zumindest einem Mitnehmerelement und dem zumindest einen Ladungsträger führende Kollision ausgeschlossen werden kann.

Vorteilhaft ist die zumindest eine Vereinzelungseinrichtung des Zugmittels ausgebildet, in zumindest einem Zugmittelstreckenbereich zumindest einen der Ladungsträger mitzunehmen. Damit kann auf eine kostenintensive Sensorik zur Überwachung des Transportsystems in diesem Zugmittelstreckenbereich verzichtet werden.

Vorzugsweise durchläuft das Zugmittel im Bereich des Transportstreckenprofils eine Bahnkurve. Dabei ist die zumindest eine Vereinzelungseinrichtung am Zugmittel entlang einer definierten Bahnkurve an das Transportstreckenprofil heranführbar. Beim Heranführen verringert sich der Abstand von der zumindest einen Vereinzelungseinrichtung zum Transportstreckenprofil, bis das das zumindest eine Mitnehmerelement den zumindest einen Ladungsträger vereinzeln kann und anschliessend mitnehmen kann. Damit werden die Vereinzelungskrafteinleitung und die Mitnahmekrafteinleitung auf den zumindest einen Ladungsträger weiter verbessert.

Ein erfindungsgemässes Verfahren zum Vereinzeln und Mitnehmen zumindest eines Ladungsträgers mit einer ersten Vereinzelungseinrichtung und mit zumindest einer weiteren Vereinzelungseinrichtung an einem Transportsystem umfasst die folgenden Schritte:
Zuerst erfolgt das Heranführen der ersten Vereinzelungseinrichtung an den zumindest einen Ladungsträger. Nach dem Heranführen der ersten Vereinzelungseinrichtung berührt das zumindest eine Mitnehmerelement der ersten Vereinzelungseinrichtung zumindest einen Ladungsträger im Transportsystem. Vorteilhaft befindet sich das zumindest eine Mitnehmerelement der ersten Vereinzelungseinrichtung dabei in deren Mitnahmeposition, in welcher der zumindest eine Ladungsträger vom zumindest einen Mitnehmerelement mitnehmbar ist.

Sofern das Mitnehmen des zumindest einen Ladungsträgers mit dem zumindest einen Mitnehmerelement der ersten Vereinzelungseinrichtung nicht möglich ist, erfolgt das Überführen des zumindest einen Mitnehmerelements der ersten Vereinzelungseinrichtung von der Mitnahmeposition in die Freigabeposition mithilfe des zumindest einen Ladungsträgers. In weitere Folge kann das zumindest eine Mitnehmerelement der ersten Vereinzelungseinrichtung an dem zumindest einen Ladungsträger vorbeigeführt werden.

Anschliessend erfolgt das Separieren des zumindest einen Ladungsträger von dem weiteren Ladungsträger mit dem zumindest einen Mitnahmeelement der ersten Vereinzelungseinrichtung.

Damit wird eine zu einem Formschluss zwischen dem zumindest einem Mitnehmerelement und dem zumindest einen Ladungsträger führende Kollision im Transportsystem verhindert.

Vorteilhaft wird beim Separieren das zumindest eine Mitnehmerelement der ersten Vereinzelungseinrichtung von der Freigabeposition in die Mitnahmeposition überführt. Dabei wird der Ladungsträger in eine Separierrichtung welche insbesondere entgegen der Transportrichtung des Zugmittels verläuft, zu dem Mitnahmeelement der nachfolgenden weiteren Vereinzelungseinrichtung geführt.

Der zumindest eine Ladungsträger wird in weiterer Folge von dem zumindest einen Mitnehmerelement der zumindest einen weiteren Vereinzelungseinrichtung entlang der Zugmittelstrecke des Zugmittels mitgenommen. Dieses Verfahren gewährleistet somit ein ausfallsfreies Betreiben eines Transportsystems, da beim Separieren bzw. Vereinzeln des zumindest einen Ladungsträgers vom weiteren Ladungsträger eine ungewünschte Kollision verhindert wird. Dabei ist die Vereinzelungseinrichtung ein Teil des Zugmittels im Transportsystem, sodass eine separate Vereinzelungseinrichtung eingespart werden kann.

Insbesondere wird das hier vorliegend beschriebene Verfahren mit zumindest einer der hier vorliegend beschriebenen Vereinzelungseinrichtung ausgeführt, wobei zumindest eine der Vereinzelungseinrichtungen wie zuvor beschrieben ausgebildet ist. Insbesondere wird das hier vorliegend beschriebene Verfahren an einem hier vorliegend beschriebenen Transportsystem ausgeführt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Vereinzelungseinrichtung in einer perspektivischen Darstellung,
- Fig. 2: die Vereinzelungseinrichtung gemäss Fig. 1, wobei sich das zumindest eine Mitnehmerelement in der Mitnahmeposition befindet, in einer perspektivischen Darstellung,
- Fig. 3: die Vereinzelungseinrichtung gemäss Fig. 1, wobei sich das zumindest eine Mitnehmerelement in der Freigabeposition befindet, in einer perspektivischen Darstellung,
- Fig. 4: eine zweite Ausführungsform der erfindungsgemässen Vereinzelungseinrichtung in einer perspektivischen Darstellung,
- Fig. 5: die Vereinzelungseinrichtung gemäss Fig. 4, wobei sich der Mitnehmerpin in der Mitnahmeposition befindet, in einer Schnittansicht,
- Fig. 6: eine weitere Ausführungsform der erfindungsgemässen Vereinzelungseinrichtung, wobei sich der Mitnehmerpin in der Mitnahmeposition befindet, in einer perspektivischen Darstellung,
- Fig. 7: die Vereinzelungseinrichtung gemäss Fig. 6, wobei sich der Mitnehmerpin in der Freigabeposition befindet, in einer perspektivischen Darstellung,
- Fig. 8: ein erfindungsgemässes Zugmittel mit mehreren Vereinzelungseinrichtungen gemäss Fig. 2 in einer perspektivischen Darstellung,
- Fig. 9: das Zugmittel gemäss Fig. 8 mit mehreren Vereinzelungseinrichtungen gemäss Fig. 2 in einer Schnittansicht,
- Fig. 10: ein erfindungsgemässes Transportsystem mit einem Zugmittel gemäss Fig. 8 in einer Aufsicht,
- Fig. 11: das Transportsystem gemäss Fig. 10 mit mehreren Vereinzelungseinrichtungen gemäss Fig. 2 und gemäss Fig. 3 in einer Seitenansicht, und
- Fig. 12: das Transportsystem gemäss Fig. 11 als Schrägförderer ausgebildet in einer perspektivischen Darstellung.

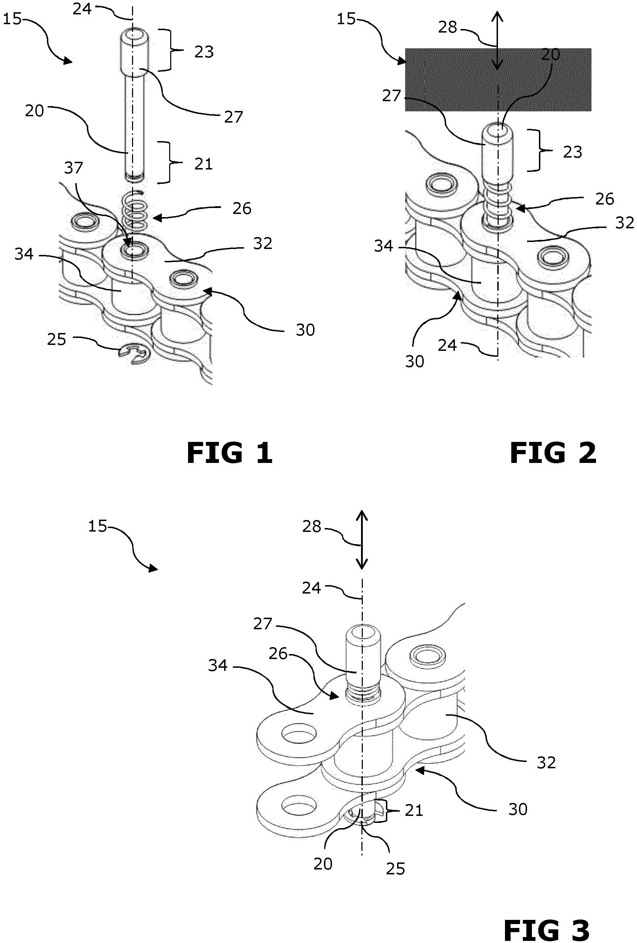

Die Fig. 1 bis 3 zeigen eine erste Ausführungsform einer Vereinzelungseinrichtung zum Separieren von einem Ladungsträger von einem weiteren Ladungsträger. Diese Vereinzelungseinrichtung 15 umfasst ein Mitnehmerelement 20 zum Anordnen an einem Zugmittel 30 eines Transportsystems. Das Mitnehmerelement 20 weist einen Befestigungsabschnitt 21 zum Befestigen des Mitnehmerelements 20 an dem Zugmittel 30 und einen Mitnahmeabschnitt 23 zum Mitnehmen zumindest eines Ladungsträgers auf. Das Mitnehmerelement 20 weist einen Mitnehmerpin 27 auf, der am Mitnahmeabschnitt 23 angeordnet ist und der beim Mitnehmen des Ladungsträgers mit diesem in Kontakt tritt.

Zwischen dem Befestigungsabschnitt 21 und dem Mitnahmeabschnitt 23 ist eine Überführungseinrichtung 26 angeordnet. Das Mitnehmerelement 20 und der Mitnehmerpin 27 sind einteilig und bolzenförmig ausgeführt. Die Überführungseinrichtung 26 ist als Schraubenfeder ausgebildet und kann das Mitnehmerelement 20 von einer Freigabeposition in eine Mitnahmeposition überführen.

Fig. 2 zeigt das Mitnehmerelement 20 in dessen Mitnahmeposition, wobei die als Überführungseinrichtung 26 ausgebildete Schraubenfeder gegen den Mitnehmerpin 27 des Mitnehmerelements 20 drückt und das Mitnehmerelement 20 vorspannt. Fig. 3 zeigt das Mitnehmerelement 20 in dessen Freigabeposition, wobei die als Überführungseinrichtung 26 ausgebildete Schraubenfeder zusammengedrückt dargestellt ist und das Mitnehmerelement 20 mit dem Befestigungsabschnitt 21 zumindest abschnittsweise aus dem Zugmittel 30 ragt. Das überführbare Mitnehmerelement 20 ist in der Durchgangsöffnung 37 an den Zugmittelelementen 32 und 34 angeordnet und ist in diesen entlang der Längsachse 24 des Mitnehmerelements 20 und in die Überführungsrichtungen 28 überführbar bzw. bewegbar.

Das Überführen des Mitnehmerelements 20 von der Mitnahmeposition in die Freigabeposition erfolgt mithilfe des Ladungsträgers, sofern der Ladungsträger entlang der Längsachse 24 des Mitnehmerelements 20 in die Überführungsrichtung 28 auf den Mitnehmerpin 27 drückt. Das Mitnehmerelement 20 ist mithilfe des Befestigungsmittels 25 in der Durchgangsöffnung 37 gehalten. Das gezeigte Befestigungsmittel 25 ist ein Sicherungsring.

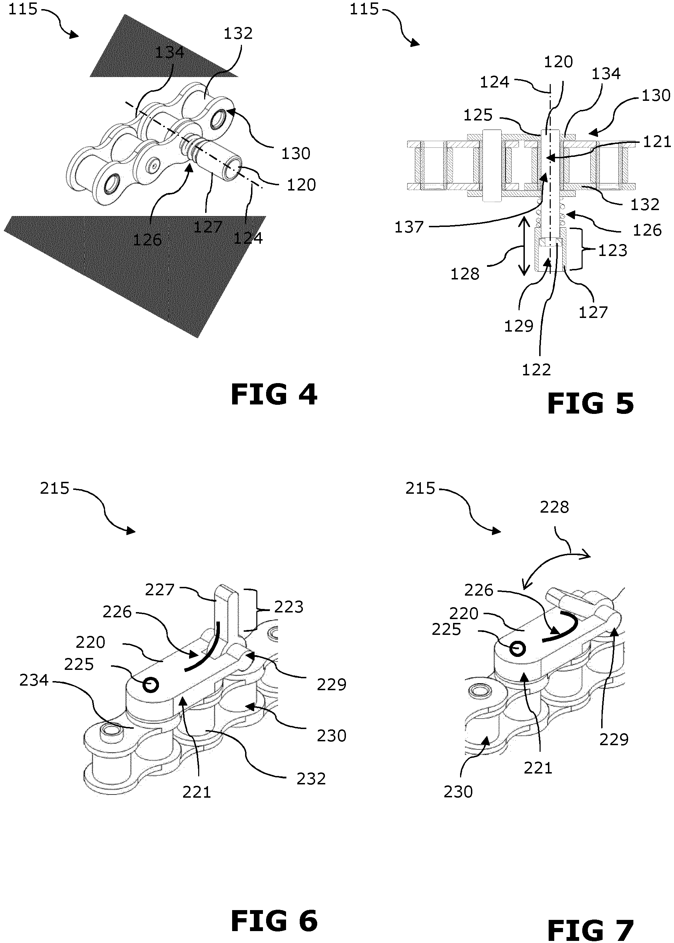

Die Fig. 4 und 5 zeigen eine alternative Ausführungsform der Vereinzelungseinrichtung zum Separieren von einem Ladungsträger von einem weiteren Ladungsträger. Die Vereinzelungseinrichtung 115 umfasst ein Mitnehmerelement 120 zum Anordnen an einem Zugmittel 130 eines Transportsystems. Das Mitnehmerelement 120 weist einen Befestigungsabschnitt 121 zum Befestigen des Mitnehmerelements 120 an dem Zugmittel 130 und einen Mitnahmeabschnitt 123 zum Mitnehmen zumindest eines Ladungsträgers auf. Das Mitnehmerelement 120 ist in der Durchgangsöffnung 137 an den Zugmittelelementen 132 und 134 fixiert, wobei das Mitnehmerelement 120 mit dem Befestigungsmittel 125 kaltverformt ist.

Das Mitnehmerelement 120 weist einen Mitnehmerpin 127 auf, der am Mitnahmeabschnitt 123 angeordnet ist und der beim Mitnehmen eines Ladungsträgers mit diesem in Kontakt tritt. Das Mitnehmerelement 120 ist bolzenförmig ausgeführt.

Zwischen dem Befestigungsabschnitt 121 und dem Mitnahmeabschnitt 123 ist eine Überführungseinrichtung 126 angeordnet. Die Überführungseinrichtung 126 ist als Schraubenfeder ausgebildet und kann den Mitnehmerpin 127 relativ zu dem Mitnehmerelement 220 versetzen und somit den Mitnehmerpin 127 von der Freigabeposition in die Mitnahmeposition überführen. Der Mitnehmerpin 127 ist als Zylinderhülse ausgeführt. Das Mitnehmerelement 120 weist am Mitnahmeabschnitt 123 ein Mitnehmerkolbenelement 122 auf. Der Mitnehmerpin 127 weist eine Mitnehmerpinöffnung 129 auf, welche das Mitnehmerkolbenelement 122 des Mitnehmerelements 120 zumindest bereichsweise aufnimmt. Das Mitnehmerkolbenelement 122 ist darin entlang der Längsachse 124 des Mitnehmerelements 120 und in die Überführungsrichtungen 128 bewegbar bzw. überführbar. Der Mitnehmerpin 127 ist somit entlang der Längsachse 124 des Mitnehmerelements 120 und in die Überführungsrichtungen 128 überführbar bzw. bewegbar.

Fig. 4 zeigt das Mitnehmerelement 120 in dessen Mitnahmeposition, wobei die als Überführungseinrichtung 126 ausgebildete Schraubenfeder gegen den Mitnehmerpin 127 des Mitnehmerelements 120 drückt und den Mitnehmerpin 127 vorspannt. In der Freigabeposition des Mitnehmerpins 127 ist die als Überführungseinrichtung 26 ausgebildete Schraubenfeder zusammengedrückt, wobei der Mitnahmeabschnitt 123 der Mitnehmerelements 120 in die Mitnehmerpinöffnung 129 weiter eindringt und somit den Abstand des Mitnehmerpins 127 zum Zugmittel 130 verringert (nicht gezeigt).

Die Fig. 6 und Fig. 7 zeigen eine alternative Ausführungsform der Vereinzelungseinrichtung zum Separieren von einem Ladungsträger von einem weiteren Ladungsträger. Die Vereinzelungseinrichtung 215 umfasst ein Mitnehmerelement 220 zum Anordnen an einem Zugmittel 230 eines Transportsystems. Das Mitnehmerelement 220 weist einen Befestigungsabschnitt 221 zum Befestigen des Mitnehmerelements 220 an dem Zugmittel 230 und einen Mitnahmeabschnitt 223 zum Mitnehmen zumindest eines Ladungsträgers auf. Am Befestigungsabschnitt 221 ist eine Schraube als Befestigungsmittel 225 angeordnet, welche somit das Mitnehmerelement 220 an dem Zugmittel 230 befestigt.

Das Mitnehmerelement 220 weist einen Mitnehmerpin 227 auf, der mithilfe eines Gelenks 229 am Mitnahmeabschnitt 223 angeordnet ist und der beim Mitnehmen eines Ladungsträgers mit diesem in Kontakt tritt. Der Mitnehmerpin 227 ist quaderförmig ausgebildet. Zwischen dem Befestigungsabschnitt 221 und dem Mitnahmeabschnitt 223 ist eine Überführungseinrichtung 226 angeordnet. Die Überführungseinrichtung 226 ist als Blattfeder ausgebildet und kann den Mitnehmerpin 227 von der Freigabeposition in die Mitnahmeposition überführen. Der Mitnehmerpin 127 ist mithilfe des Gelenks 229 in die Überführungsrichtung 228 überführbar bzw. schwenkbar.

Fig. 6 zeigt den Mitnehmerpin 227 in dessen Mitnahmeposition, wobei die als Überführungseinrichtung 226 ausgebildete Blattfeder gegen den Mitnehmerpin 227 des Mitnehmerelements 220 drückt und den Mitnehmerpin 227 vorspannt bzw. in der Mitnahmeposition hält. Fig. 7 zeigt den Mitnehmerpin 227 in dessen Freigabeposition, wobei die als Überführungseinrichtung 226 ausgebildete Blattfeder zusammengedrückt bzw. zusammengebogen dargestellt ist und der Mitnehmerpin 227 zumindest abschnittsweise an den Befestigungsabschnitt 221 angenähert ist.

In einer hier nicht gezeigten Ausführungsform ist die Überführungseinrichtung mit einem Antrieb versehen, der ausgebildet ist, das Mitnehmerelement und/oder den Mitnehmerpin von der Mitnahmeposition in die Freigabeposition und wieder zurück in die Mitnahmeposition zu überführen. Diese Überführungseinrichtung ist in jeder der zuvor genannten Ausführungsform der Vereinzelungseinrichtungen einsetzbar.

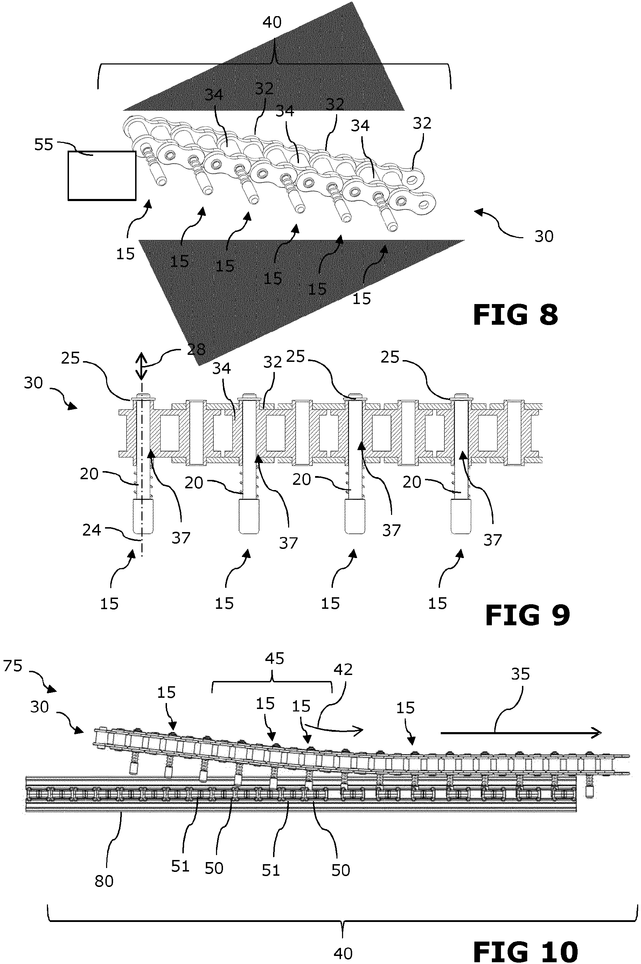

Fig. 8 und Fig. 9 zeigen eine Förderkette als Zugmittel 30, welches mehrere Vereinzelungseinrichtungen 15 gemäss Fig. 1 bis Fig. 3 aufweist. Ergänzend oder alternativ können an diesem Zugmittel 30 auch Vereinzelungseinrichtungen 115 bzw. 215 gemäss den Fig. 4 und Fig. 5 und/oder gemäss den Fig. 6 und 7 angeordnet sein. Das Zugmittel 30 weist mehrere Kettenglieder als Zugmittelelemente 32, 34 auf. Das Zugmittel 30 ist mithilfe einer Antriebseinrichtung 55 entlang der Zugmittelstrecke 40 bewegbar. Die Antriebseinrichtung 55 wird von einem Motor angetrieben.

Jedes Mitnehmerelement 20 der mehrere Vereinzelungseinrichtungen 15 ist in einer Durchführöffnung 37 an zumindest zwei Zugmittelelementen 32, 34 des Zugmittels 30 angeordnet, wobei die Mitnehmerelemente 20 entlang der Längsachse 24 in den Durchführöffnungen 37 an den Zugmittelelementen 32, 34 in Überführungsrichtung 28 versetzbar bzw. bewegbar angeordnet sind (Fig. 9). Jedes der Mitnehmerelemente 20 wird mit einem als Sicherungsring ausgebildeten Befestigungsmittel 25 an dem Zugmittel 30 beweglich gehalten. Ohne das Befestigungsmittel 25 können die Mitnehmerelemente 20 von dem Zugmittel 30 separiert werden.

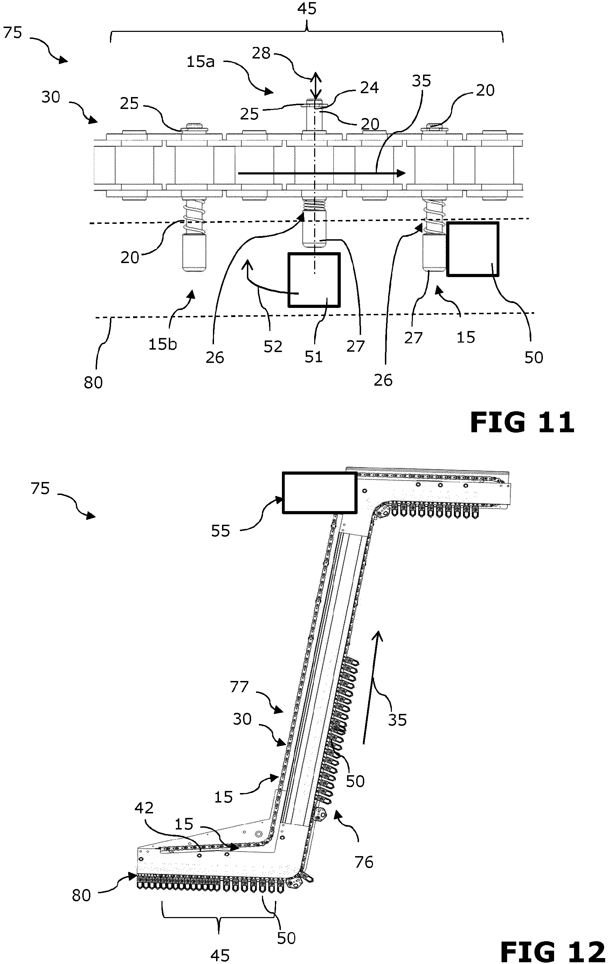

Fig. 10 und Fig. 11 zeigen ein Transportsystem 75 zum Transportieren von Ladungsträger 50, 51 mit dem Zugmittel 30 gemäss Fig. 8 und Fig. 9. Das Transportsystem 75 weist ein Transportstreckenprofil 80 zur Aufnahme und Führung der mehreren Ladungsträger 50, 51 auf. Die Ladungsträger 50, 51 sind dicht aneinander gepackt am Transportstreckenprofil 80 angeordnet und können sich in Transportrichtung 35 am Transportstreckenprofil 80 frei bewegen. Das Zugmittel 30 und die daran angeordneten Vereinzelungseinrichtungen 15 sind entlang der Zugmittelstrecke 40 und entlang einer Bahnkurve 42 in Transportrichtung 35 an das Transportstreckenprofil 80 heranführbar.

Beim Heranführen nähert sich das Zugmittel 30 entlang der Bahnkurve 42 an das Transportstreckenprofil 80 an, sodass sich der Abstand zwischen dem Zugmittel 30 und dem Transportstreckenprofil 80 entlang der Zugmittelstrecke 40 verringert, bis das Zugmittel 30 im Wesentlichen parallel zum Transportstreckenprofil 80 verläuft. Anschliessend bewegt sich das Zugmittel 30 parallel zum Transportstreckenprofil 80. Dabei berührt das Mitnehmerelement 20 einer der Vereinzelungseinrichtungen 15 in einem Zugmittelstreckenbereich 45 einen der Ladungsträger 50, 51, vereinzelt diesen und nimmt diesen entlang der Zugmittelstrecke 40 mit.

Wie in Fig. 11 gezeigt, nimmt der Mitnehmerpin 27 des Mitnehmerelements 20 einer der Vereinzelungseinrichtung 15 den Ladungsträger 50 im Zugmittelstreckenbereich 45 mit. Der Mitnehmerelements 20 befindet sich dabei in der Mitnahmeposition und wird von der als Schraubenfeder ausgebildeten Überführungseinrichtung 26 in der Mitnahmeposition gehalten. Der Ladungsträger 50 wird am Transportstreckenprofil 80 geführt und vom Mitnehmerelement 20 entlang der Transportrichtung 35 vereinzelt und mitgenommen.

Im Fall, dass das Mitnehmen des Ladungsträgers 51 mit dem Mitnehmerelement 20 der ersten Vereinzelungseinrichtung 15a nicht möglich ist, erfolgt das Überführen des Mitnehmerelements 20 der ersten Vereinzelungseinrichtung 15a von der Mitnahmeposition in die Freigabeposition, wie hier vorliegend beschrieben - siehe Fig. 2 und Fig. 3. Dabei wird die als Schraubenfeder ausgebildeten Überführungseinrichtung 26 zusammengedrückt.

Das Überführen des Mitnehmerelements 20 erfolgt mithilfe des Ladungsträgers 51, der in Überführungsrichtungen 28 auf den Mitnehmerpin 27 des Mitnehmerelements 20 drückt, sodass das Mitnehmerelement 20 in die Überführungsrichtungen 28 überführt bzw. versetzt wird. Da das Zugmittel 30 in weitere Folge entlang der Transportrichtung 35 weiterbewegt wird, wird das Mitnehmerelement 20 der ersten Vereinzelungseinrichtung 15a an diesem Ladungsträger 50 vorbeigeführt.

Anschliessend wird das Mitnehmerelement 20 der ersten Vereinzelungseinrichtung 15a mithilfe der als Schraubenfeder ausgebildeten Überführungseinrichtung 26 von der Freigabeposition in die Mitnahmeposition überführt. Dabei wird der Ladungsträger 51 in die Separierrichtung 52, zu dem Mitnahmeelement 20 der nachfolgenden weiteren Vereinzelungseinrichtung 15b geführt, sodass das Separieren des Ladungsträgers 50 von dem weiteren Ladungsträger 51 erfolgt. Dabei bleibt der Ladungsträger 51 zeitweilig ortsfest, wobei sich das Mitnehmerelement 20 in Transportrichtung 35 weiterbewegt.

Der Ladungsträger 51 wird in weiterer Folge von dem Mitnehmerelement 20 der weiteren Vereinzelungseinrichtung 15b entlang der Zugmittelstrecke 40 des Zugmittels 30 mitgenommen.

Das zuvor beschriebene Verfahren ist ebenfalls mit der Vereinzelungseinrichtung 115 am Zugmittel 130 gemäss Fig. 4 und Fig. 5 sowie mit der Vereinzelungseinrichtung 215 am Zugmittel 230 gemäss Fig. 6 und Fig. 7 ausführbar, wobei der jeweilige Mitnehmerpin 127 bzw. 227, wie zuvor beschrieben, vom Ladungsträger 51 in deren Freigabeposition überführt wird.

Fig. 12 zeigt das zuvor beschriebene Transportsystem 75 als Schrägfördersystem. Das Schrägfördersystem weist ein Zugmittel 30 auf, das in sich geschlossen ist und entlang der Zugmittelstrecke 40 zumindest abschnittweise eine Steigung 76 und zumindest abschnittweise ein Gefälle 77 aufweist. Die Ladungsträger 50 werden mithilfe des Zugmittels 30 und der daran angeordneten Vereinzelungseinrichtungen 15 entlang der Transportrichtung 35 transportiert und überwinden dabei die Steigung 76 kontrolliert. Wird die Transportrichtung 35 des Zugmittels 30 umgekehrt, dann überwinden die Ladungsträger 50 die Steigung 76, welche dann ein Gefälle für die Ladungsträger 50 ausbildet (nicht gezeigt) Das Zugmittel 30 wird mithilfe der Antriebseinrichtung 55 in Bewegung versetzt. Dabei werden die Ladungsträger 50 wie hier vorliegend beschrieben im Zugmittelstreckenbereich 45 vereinzelt, wobei das Zugmittel 30 entlang einer Bahnkurve 42 an das Transportstreckenprofil 80 angenähert wird.

### Bezugszeichenliste

- 15: Vereinzelungseinrichtung
- 15a: erste Vereinzelungseinrichtung
- 15b: weitere Vereinzelungseinrichtung
- 20: Mitnehmerelement
- 21: Befestigungsabschnitt von 20
- 23: Mitnahmeabschnitt von 20
- 24: Längsachse von 20
- 25: Befestigungsmittel
- 26: Überführungseinrichtung
- 27: Mitnehmerpin von 20
- 28: Überführungsrichtungen
- 30: Zugmittel
- 32: Zugmittelelemente von 30
- 34: Zugmittelelemente von 30
- 35: Transportrichtung von 30
- 37: Durchgangsöffnung an 32 bzw. 34
- 40: Zugmittelstrecke
- 42: Bahnkurve
- 45: Zugmittelstreckenbereich
- 50: Ladungsträger
- 51: weiterer Ladungsträger
- 52: Separierrichtung
- 55: Antriebseinrichtung
- 75: Transportsystem
- 76: Steigung im 75
- 77: Gefälle im 75
- 80: Transportstreckenprofil

- 115: Vereinzelungseinrichtung
- 120: Mitnehmerelement
- 121: Befestigungsabschnitt von 120
- 122: Mitnehmerkolbenelement
- 123: Mitnahmeabschnitt von 120
- 124: Längsachse von 120
- 125: Befestigungsmittel
- 126: Überführungseinrichtung
- 127: Mitnehmerpin von 120
- 128: Überführungsrichtungen
- 129: Mitnehmerpinöffnung von 127
- 130: Zugmittel
- 132: Zugmittelelemente von 130
- 134: Zugmittelelemente von 130
- 137: Durchgangsöffnung an 132 bzw. 134

- 215: Vereinzelungseinrichtung
- 220: Mitnehmerelement
- 221: Befestigungsabschnitt von 220
- 223: Mitnahmeabschnitt von 220
- 225: Befestigungsmittel
- 226: Überführungseinrichtung
- 227: Mitnehmerpin von 220
- 228: Überführungsrichtungen
- 229: Gelenk von 220
- 230: Zugmittel
- 232: Zugmittelelemente von 230
- 234: Zugmittelelemente von 230

## Patentansprüche

1. Vereinzelungseinrichtung (15, 15a, 15b; 115; 215) zum Separieren von zumindest einem Ladungsträger (50) von einem weiteren Ladungsträger (51) umfassend zumindest ein Mitnehmerelement (20; 120; 220) zum Anordnen an einem Zugmittel (30; 130; 230) eines Transportsystems (75), wobei das zumindest eine Mitnehmerelement (20; 120; 220) einen Befestigungsabschnitt (21; 121; 221) zum Befestigen des zumindest einen Mitnehmerelements (20; 120; 220) an dem Zugmittel (30; 130; 230) und einen Mitnahmeabschnitt (23; 123; 223) zum Mitnehmen zumindest eines Ladungsträgers (50, 51) aufweist, **dadurch gekennzeichnet, dass** das zumindest eine Mitnehmerelement (20; 120; 220) zumindest abschnittsweise von einer Mitnahmeposition in eine Freigabeposition überführbar ist.

2. Vereinzelungseinrichtung nach Anspruch 1, **dadurch gekennzeichnet, dass** zumindest eine Überführungseinrichtung (26; 126; 226) zum zumindest abschnittsweisen Überführen des zumindest einen Mitnehmerelements (20; 120; 220) zumindest von der Freigabeposition in die Mitnahmeposition vorhanden ist, welche vorteilhaft zwischen dem Befestigungsabschnitt (21; 121; 221) und dem Mitnahmeabschnitt (23; 123; 223) des zumindest einen Mitnehmerelements (20; 120; 220) angeordnet ist und welches weiter vorteilhaft aus der Gruppe einer Gelenkseinrichtung, einer Federeinrichtung oder einer Magneteinrichtung stammt.

3. Vereinzelungseinrichtung nach Anspruch 1 oder 2, **dadurch gekennzeichnet, dass** das zumindest eine Mitnehmerelement (20; 120; 220) in der Mitnahmeposition an einer Bewegung entgegen einer Mitnahmerichtung, in der das Zugmittel (30; 130; 230) zum Mitnehmen eines Ladungsträgers (50, 51) bewegbar ist, gehindert ist.

4. Vereinzelungseinrichtung nach einem der Ansprüche 1 bis 3, **dadurch gekennzeichnet, dass** das zumindest eine Mitnehmerelement (20; 120; 220) geradlinig in einer quer zu einer Mitnahmerichtung, in der das Zugmittel (30; 130; 230) zum Mitnehmen eines Ladungsträgers (50, 51) bewegbar ist, verlaufenden Richtung von der Mitnahmeposition in die Freigabeposition bewegbar ist.

5. Vereinzelungseinrichtung nach einem der Ansprüche 1 bis 4, **dadurch gekennzeichnet, dass** das zumindest eine Mitnehmerelement (20; 120; 220) einen Mitnehmerpin (27; 127; 227) aufweist, welcher am zumindest einen Mitnehmerelement (20; 120; 220) angeordnet ist und vorteilhaft von der Mitnahmeposition in die Freigabeposition überführbar ist, wobei der Mitnehmerpin (27; 127; 227) insbesondere mit dem zumindest einen Mitnehmerelement (20; 120; 220) gemeinsam von der Mitnahmeposition in die Freigabeposition überführbar ist.

6. Vereinzelungseinrichtung nach einem der Ansprüche 2 bis 5, **dadurch gekennzeichnet, dass** die zumindest eine Überführungseinrichtung (26; 126; 226) zumindest abschnittsweise entlang einer Längsachse (24; 124) des zumindest einen Mitnehmerelements (20; 120; 220) relativ zu dem zumindest einen Mitnehmerelement (20; 120; 220) versetzbar ist und/oder der Mitnehmerpin (27; 127; 227) zumindest abschnittsweise entlang einer Längsachse (24; 124) des zumindest einen Mitnehmerelements (20; 120; 220) relativ zu dem zumindest einen Mitnehmerelement (20; 120; 220) versetzbar ist.

7. Vereinzelungseinrichtung nach Anspruch 6, **dadurch gekennzeichnet, dass** die Längsachse (24; 124) quer zu einer Mitnahmerichtung, in der das Zugmittel (30; 130; 230) zum Mitnehmen eines Ladungsträgers (50, 51) bewegbar ist, angeordnet ist.

8. Vereinzelungseinrichtung nach einem der Ansprüche 2 bis 7, **dadurch gekennzeichnet, dass** die zumindest eine Überführungseinrichtung (26; 126; 226) ausgebildet ist, das zumindest eine Mitnehmerelement (20; 120; 220) und/oder den Mitnehmerpin (27; 127; 227) während dem Mitnehmen eines Ladungsträgers (50, 51) in der Mitnahmeposition zu halten.

9. Zugmittel (30; 130; 230) mit mehreren Zugmittelelementen (32, 34; 134, 134; 232, 234), insbesondere eine Förderkette, umfassend zumindest eine Vereinzelungseinrichtung (15, 15a, 15b; 115; 215) nach einem der Ansprüche 1 bis 5, wobei das zumindest eine Mitnehmerelement (20; 120; 220) vorteilhaft in einer Durchgangsöffnung (37; 137) an den Zugmittelelementen (32, 34; 134, 134; 232, 234) angeordnet ist und weiter vorteilhaft entlang einer Längsachse (24; 124) des zumindest einen Mitnehmerelements (20; 120; 220) von der Mitnahmeposition in die Freigabeposition überführbar ist.

10. Transportsystem (75) zum Transportieren von Ladungsträgern (50, 51), insbesondere ein Schrägfördersystem, mit einem Transportstreckenprofil (80) zur Aufnahme und Führung von mehreren Ladungsträgern (50, 51) umfassend zumindest ein Zugmittel (30; 130; 230) nach Anspruch 9.

11. Transportsystem nach Anspruch 10, **dadurch gekennzeichnet, dass** die zumindest eine Vereinzelungseinrichtung (15, 15a, 15b; 115; 215) entlang einer Zugmittelstrecke (40) an das Transportstreckenprofil (80) heranführbar ist und die zumindest eine Vereinzelungseinrichtung (15, 15a, 15b; 115; 215) des Zugmittels (30; 130; 230) vorteilhaft ausgebildet ist, in zumindest einem Zugmittelstreckenbereich (45) zumindest einen der Ladungsträger (50, 51) mitzunehmen.

12. Transportsystem nach Anspruch 10 oder 11, **dadurch gekennzeichnet, dass** das Zugmittel (30; 130; 230) im Bereich des Transportstreckenprofils (80) eine Bahnkurve (42) durchläuft.

13. Verfahren zum Vereinzeln und Mitnehmen zumindest eines Ladungsträgers (50, 51) mit einer ersten Vereinzelungseinrichtung und mit zumindest einer weiteren Vereinzelungseinrichtung, wobei insbesondere zumindest eine der Vereinzelungseinrichtungen (15, 15a, 15b; 115; 215) nach einem der Ansprüche 1 bis 8 ausgebildet ist, an einem Transportsystem, insbesondere einem Transportsystem (75) nach einem der Ansprüche 10 bis 12, wobei das Verfahren zumindest die Schritte umfasst:
- Heranführen der ersten Vereinzelungseinrichtung (15a) an den zumindest einen Ladungsträger (51);
- Überführen des zumindest einen Mitnehmerelements (20; 120; 220) der ersten Vereinzelungseinrichtung (15a) von einer Mitnahmeposition in eine Freigabeposition;
- Separieren des zumindest einen Ladungsträgers (51) von einem weiteren Ladungsträger (50) mit dem zumindest einen Mitnahmeelement (20; 120; 220) der ersten Vereinzelungseinrichtung (15a);
- Mitnehmen des zumindest einen Ladungsträger (51) mit dem zumindest einen Mitnahmeelement (20; 120; 220) der zumindest einen weiteren Vereinzelungseinrichtung (15b).
